**Europäisches Patentamt**

**European Patent Office**

**Office européen des brevets**

(19)

(11) Numéro de publication: **0 116 805**

**B1**

(12) # FASCICULE DE BREVET EUROPÉEN

(45) Date de publication du fascicule du brevet:
**03.09.86**

(51) Int. Cl.⁴: **F 16 K 3/02,** F 16 K 3/316, F 16 K 27/04

(21) Numéro de dépôt: **83420026.3**

(22) Date de dépôt: **18.02.83**

(54) **Vanne.**

(43) Date de publication de la demande:
**29.08.84 Bulletin 84/35**

(45) Mention de la délivrance du brevet:
**03.09.86 Bulletin 86/36**

(84) Etats contractants désignés:
**AT BE CH DE FR GB IT LI LU NL SE**

(56) Documents cité:
**CH-A-523 453**
**FR-A-1 439 521**
**FR-A-1 506 046**
**FR-A-2 250 415**
**FR-A-2 388 134**
**FR-A-2 460 431**
**FR-A-2 461 176**
**GB-A-820 117**

(73) Titulaire: **Ramus, Laurent Pierre Adrien, Rue Favre, F-73160 Cognin (FR)**

(72) Inventeur: **Ramus, Laurent Pierre Adrien, Rue Favre, F-73160 Cognin (FR)**

(74) Mandataire: **Maureau, Bernard, Cabinet GERMAIN & MAUREAU Le Britannia - Tour C 20, Boulevard Eugène Déruelle, F-69003 Lyon (FR)**

LIBER, STOCKHOLM 1986

EP 0 116 805 B1

## Description

L'invention concerne une vanne selon le préambule de la revendicvation 1, notamment une vanne dans lequel le corps de la vanne comporte des glissières dans lesquelles est monté coulissant une plaque de fermeture souvent designé par le mot "pelle". Ces glissières sont situées dans un plan vertical ou au moins incliné; elles sont placées de part et d'autre d'une ouverture faisant communiquer deux volumes, par exemple deux réservoirs entre eux, ou un réservoir et une canalisation, ou deux canalisations entre elles; et elles ont une hauteur supérieure à celle de cette ouverture pour que la pelle puisse la dégager totalement tout en demeurant tenue et guidée.

Pour réaliser l'étanchéité nécessaire entre les zones amont et aval de la vanne, des joints sont prévus, d'une part, dans les glissières du corps de la vanne et, d'autre part, au niveau d'une traverse horizontale qui relie ces deux glissières et est située au niveau du bord supérieur de l'ouverture contrôlée de la vanne et contre laquelle prend appui la face aval de la pelle.

Les joints placés dans les glissières du corps de la vanne consistent en réalité en un simple joint torique logé dans une rainure qui, constituant les glissières précitées, est aménagée dans les deux bords latéraux et dans le bord inférieur de l'ouverture délimitée par le corps de vanne.

Des moyens doivent bien entendu être présents pour immobiliser ce joint dans ces glissières afin d'empêcher qu'il s'en dégage lors de la manoeuvre d'ouverture de la vanne, c'est-à-dire lors du soulevement de la pelle.

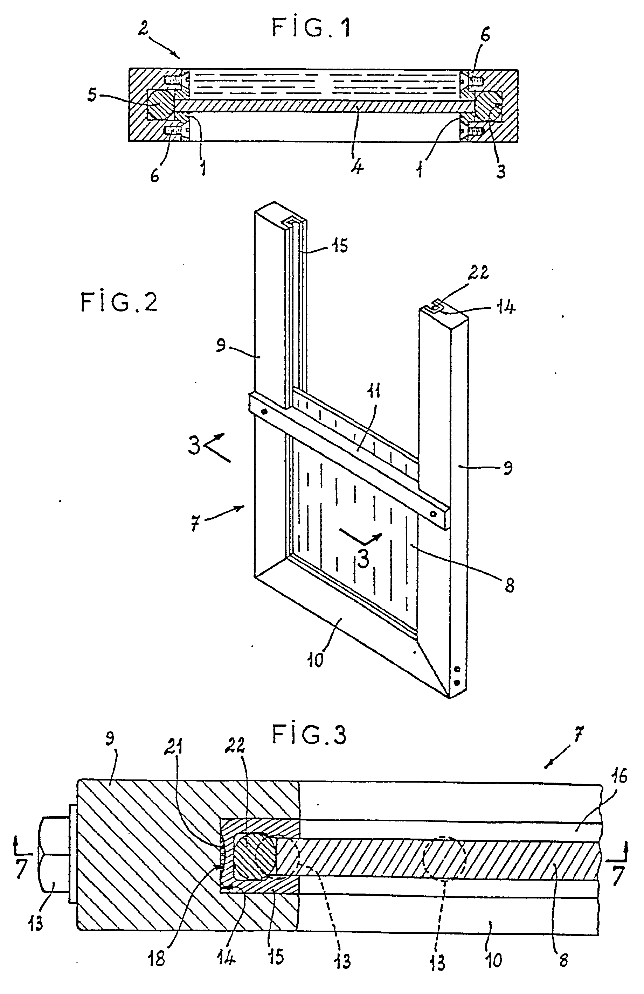

Selon l'état de la technique connu du FR-A-2.460.431, ce but est atteint en fixant sur le corps de la vanne, de part et d'autre de ses glissières, deux bandes métalliques qui délimitent entre elles le passage de la pelle et qui délimitent avec la rainure du corps de vanne le logement du joint torique. Ces bandes connues sont désignées par (1) sur la figure 1 du dessin schématique annexé dans lequel (2) désigne le corps de la vanne, (3) sa rainure ou glissière, (4) la pelle et (5) le joint torique assurant l'étanchéité entre la pelle et le corps de vanne.

La présence de ces deux bandes métalliques (I) entraîne divers inconvénients parmi lesquels il convient de citer ceux ci-après:

- leur fixation dans le corps de vanne (2) nécessite d'aménager dans ce corps des trous taraudés destinés à des vis (6) dont les têtes prennent appui contre les bandes (1); or l'aménagement de ces trous représente une opération d'usinage relativement longue et onéreuse;

- le corps de vanne (2), les bandes (1) et les vis (6) étant constitués en des metaux ou en des alliages métalliques differents, le milieu liquide dans lequel est placée la vanne donne lieu à la formation de couples électriques qui detériorent l'ensemble et rendent le démontage très difficile lorsque le joint (5) nécessite d'être changé.

L'invention remédie à ces inconvénients. Elle a pour objet une vanne qui est du type rappelé ci-dessus, mais dans laquelle un profilé ayant une section générale en U est placé au fond de la rainure des montants et de la traverse inférieur sert directement de logement au joint et de glissière à la plaque et comporte des moyens de retenue de ce joint.

Ce profilé est avantageusement constitué en un matériau amagnétique, par exemple bronze, résine synthétique... pour éviter la formation de couples électriques; et pour que son immobilisation soit effective dans la rainure du corps, il présente, venant d'étirage ou de moulage, une section primitive dans laquelle les deux branches de son U vont en s'évasant vers l'extérieur. Ainsi est obtenu un coincement de ce profilé dans la rainure du corps de vanne, lors de sa mise en place.

En outre, pour contribuer à sa fixation dans cette rainure, un collage peut être prévu. Pour cela, la face extérieure de l'âme du profilé peut présenter une rainure ou une gorge longitudinale.

Quant aux moyens permettant de retenir le joint torique dans ce profilé, ils sont constitués, selon une forme d'exécution, par un retour aménagé en direction de l'intérieur à l'extrémité de chacune des deux branches du profilé, le profilé délimitant ainsi une enceinte partiellement ouverte sur sa face extérieure et dans laquelle le joint s'emprisonne élastiquement.

L'invention sera bien comprise d'ailleurs et ses avantages ainsi que d'autres caractéristiques ressortiront bien de la description qui suit, en référence au dessin schématique annexé representant à titre d'exemple non limitatif une forme d'exécution de cette vanne:

Figure 2 représente le corps de vanne et la pelle, dans leur ensemble et en perspective;

Figure 3 est, à plus grande échelle, une vue en coupe horizontale suivant 3-3 de figure 2;

Figures 4 et 5 sont des vues en coupe transversale du profilé servant de logement au joint, respectivement avant et après sa mise en place;

Figure 6 est une vue en coupe transversale d'une variante d'exécution de ce profilé après sa mise en place, et;

Figure 7 est une vue en coupe verticale suivant 7-7 de figure 3.

La vanne murale représentée à la figure 2 est essentiellement constituée par un corps de vanne (7) et par une pelle ou plaque de fermeture (8). Le corps de vanne est formé par assemblage de deux montant verticaux (9), d'une traverse inférieure (10) et d'une traverse supérieure (11). Les deux montants (9) et la traverse inférieure (10) se terminent par des extrémités biseautées leur permettant de délimiter un angle droit; et ils sont assemblés par un fer en équerre (12) placé dans des logements de forme correspondante aménagés dans les faces intérieures des montants (9) et de la traverse (10). La fixation entre la traverse inférieure (10) et l'une des branches de l'équerre (12), de même que la fixation entre le montant vertical (9) et l'autre branche de l'équerre (12), sont obtenues au moyen des vis (3).

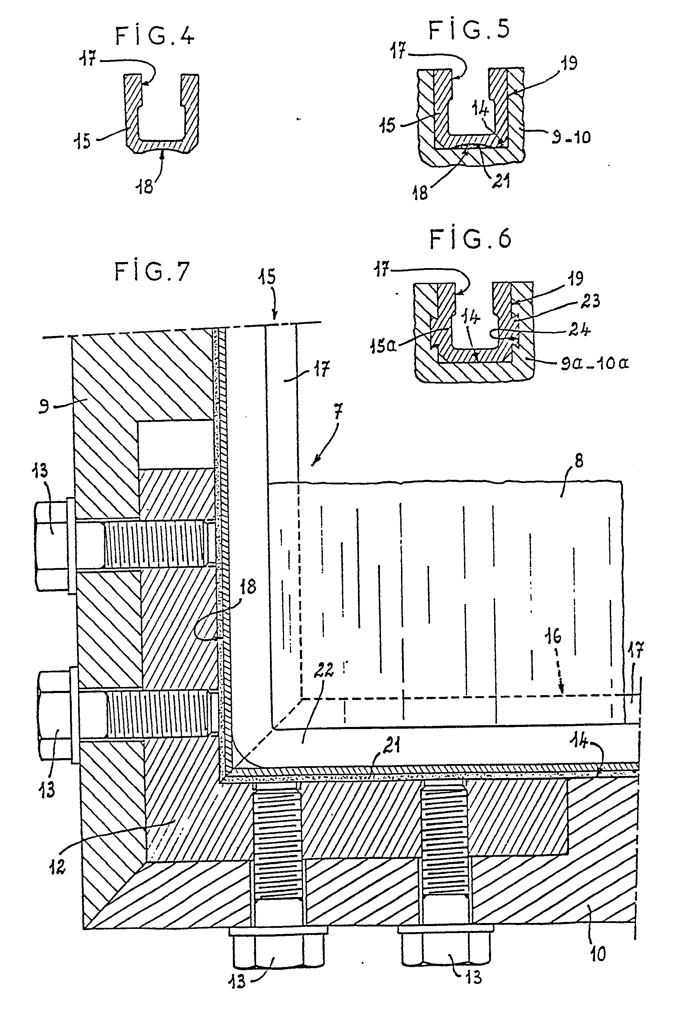

Le cadre délimité par les deux montants verticaux (9) et par la traverse inférieure (10) présente, sur sa face intérieure, une rainure continue (14). Cette rainure présente la section rectangulaire visible à la figure 6. Elle est destinée à servir de logement à un profilé qui est désigné par (15) pour celui associé à chacun des deux montants (9) et par (16) pour celui associé à la traverse inférieure (10). Chacun de ces profilés est constitué par un matériau amagnétique, par exemple en bronze ou en résine synthétique; et ils présentent primitivement le profil représenté à la figure 4. De façon préférentielle, ce profilé est monobloc, mais il est à noter qu'il peut aussi être constitué par coopération de deux profilés complémentaires.

Dans tous les cas et comme le montre la figure 4, le profilé final possède une section généralement en forme de U; et les deux jambes de ce U vont en s'évasant légèrement vers l'extérieur. Chacune des deux jambes de ce U se termine, à son extrémité supérieure et du côté intérieur, par un retour désigné par (17); et dans la face inférieure de son âme, le profilé (15) comporte une gorge longitudinale (18).

Qu'il vienne d'étirage ou de moulage, ce profilé (15) présente la forme de U évasé visible à la figure 4; mais lors de son introduction dans la rainure (14) du montant (9) ou de la traverse inférieure (10), ses deux branches se resserrent et le profilé (15) délimite alors une enceinte de section rectangulaire (19). Le simple resserrement des deux branches du profilé (15) à l'intérieur de la rainure (14) permet à lui seul d'assurer déjà une bonne tenue du profilé dans le corps de vanne. Pour garantir la fixation, il est cependant préférable d'introduire de la colle (21) dans la chambre délimitée par le fond de la rainure (14) et par la gorge (18) du profilé (15). La figure 5 représente le profilé (15) ainsi fixé dans la rainure (14) du montant (9) ou de la traverse inférieure (10) du corps de vanne.

Selon une variante d'exécution représentée à la figure 6, la liaison entre le profilé (15a) et le montant (9a) ou la traverse inférieure (10a) du corps de vanne est obtenue par coopération de nervures (23) et de rainures (24) aménagées réciproquement dans ces éléments.

Dans tous les cas, c'est l'enceinte (19) qui est utilisée pour servir de logement au joint torique (22) constituant l'élément qui assure l'étanchéité entre le corps de vanne (7) et la pelle (8). Grâce à son élasticité, ce joint torique (22) est facilement introduit dans l'enceinte (19); mais il ne peut pas s'en dégager accidentellement car il y est retenu par les retours (17) des deux branches du profilé (15). Ces deux retours (17) jouent d'ailleurs simultanement le rôle de glissières pour les bords de la pelle (8).

Tout en garantissant la même étanchéité que les vannes murales habituelles, une vanne conforme à l'invention présente, par rapport à celles habituelles, les deux avantages essentiels ci-après:

- sa fabrication est simple car les montants verticaux (9) et les traverses (10, 11) du corps de vanne ne nécessitent pas d'autre operation d'usinage que l'execution de leur rainure (14);

- les profilés (15) qui constituent un élément intermédiaire entre le corps de vanne et le joint torique (22) sont des éléments peu onéreux car Is peuvent être fabriqués par une simple opération d'étirage ou d'extrusion;

- et en raison, d'une part, de la nature amagnétique des profilés (15) et de l'absence de tous moyens mécaniques de liaison entre ces profilés et le corps de vanne, tout risque de formation de couple électrique dans le milieu liquide dans lequel se trouve la vanne est supprimé.

## Revendications

1. - Vanne à la plaque de fermeture coulissant perpendiculairement à la direction d'écoulement du fluide, dont le corps (7) est constitué par deux montants verticaux (9) et deux traverses (10, 11) horizontales, les deux montant (9) et la traverse inférieure (10) comportant des rainures (14) servant de glissières à la plaque (8) et comportant un joint (22) réalisant l'étanchéité entre le corps (7) et la plaque (8), caractérisée en ce qu'un profilé (15) ayant une section générale en U est placé au fond de la rainure (14) des montants (9) et de la traverse inférieur (10), en ce que le profilé sert directement de logement au joint (22) et de glissière à la plaque (8) et comporte des moyens de retenue (17) de ce joint.

2. - Vanne selon la revendication 1, caractérisée en ce que le profilé (15) est constitué en un matériau amagnétique.

3. - Vanne selon les revendications 1 et 2, caractérisée en ce que le profilé (15) a une section en U dont les deux branches vont en s'évasant vers l'extérieur, ces deux branches étant parallèles après introduction du profilé dans la rainure (14) du corps de vanne.

4. - Vanne selon l'une quelconque des revendications 1 à 3, caractérisée en ce que la face extérieure de l'âme du profilé (15) présente au moins une gorge longitudinale (18), et en ce que de la colle (21) est placée dans la chambre délimitée par cette gorge et le fond de la rainure (14).

5. - Vanne selon l'une quelconque des revendication 1 à 3, caractérisée en ce que le profilé (15) comporte des nervures ou rainures longitudinales extérieures (23) coopérant avec des rainures ou des nervures longitudinales intérieures (24) aménagées dans la rainure (14) du corps de vanne.

6. - Vanne selon l'une quelconque des revendications 1 à 5, caractérisée en ce que les moyens pour retenir le joint (22) dans le profilé (15) sont constitués par un retour (17) aménagé en direction de l'interieur à l'extrémité de chacune des deux branches du profilé, le profilé (15) délimitant ainsi une enceinte partiellement ouverte sur sa face extérieure et dans laquelle le joint s'emprisonne elastiquement.

7. - Vanne selon l'une quelconque des revendications 1 à 6, caractérisée en ce que les deux montants verticaux (9) et la traverse inférieure (10) du corps de vanne se raccordent par des extrémités biseautées et présentent, sur l'une de leurs faces intérieure ou extérieure, des évidements servant de logement à une équerre (12) réalisant, grâce à des vis (13), la liaison entre le montant correspondant (9) et la traverse (10).

**Patentansprüche**

1. Schieber mit verschiebbarer Verschließplatte, wobei der Schieberkörper (7) durch zwei jeweils senkrecht zur Richtung der Fluidströmung stehende vertikale Stützen (9) und zwei horizontale Querstreben (10, 11) gebildet ist, die jeweils als Gleitführungen für die Verschließplatte (8) dienende Rinnen (14) und eine Dichtung (22) aufweisen, welche die Abdichtung zwischen dem Schieberkörper (7) und der Verschließplatte (8) darstellen, dadurch gekennzeichnet, daß in den Grund der Rinne (14) der Stützen (9) und der unteren Querstrebe (10) ein Profil (15) mit einem im wesentlichen U-förmigen Querschnitt eingelegt ist, und daß dieses Profil direkt als Aufnahme für die Dichtung (22) und als Gleitführung für die Verschließplatte (8) dient und Mittel (17) zum Halten der Dichtung aufweist.

2. Schieber nach Anspruch 1, dadurch gekennzeichnet, daß das Profil (15) aus amagnetischem Material besteht.

3. Schieber nach Anspruch 1 oder 2, dadurch gekennzeichnet, daß das Profil (15) einen U-förmigen Querschnitt hat, dessen beide Schenkel nach außen auseinanderlaufen, wobei diese beiden Schenkel nach Einlegen des Profils in die Rinne (14) des Schieberkörpers parallel verlaufen.

4. Schieber nach einem der Ansprüche 1 bis 3, dadurch gekennzeichnet, daß die Außenseite der Grundseite des Profiles (15) wenigstens eine in Längsrichtung verlaufende Hohlkehle (18) aufweist, und daß in die durch diese Hohlkehle und die Bodenfläche der Rinne (14) des Schieberkörpers gebildete Kammer ein Kleber (21) eingebracht wird.

5. Schieber nach einem der Ansprüche 1 bis 3, dadurch gekennzeichnet, daß das Profil (15) äußere, in Längsrichtung verlaufende Rippen bzw. Rinnen (23) aufweist, die mit inneren, in Längsrichtung verlaufenden Rinnen bzw. Rippen (24) zusammenwirken, welche in der Rinne (14) des Schieberkörpers ausgebildet sind.

6. Schieber nach einem der Ansprüche 1 bis 5, dadurch gekennzeichnet, daß die Mittel zum Halten der Dichtung (22) im Profil (15) durch einen jeweils am hinteren Ende jedes der beiden Schenkel des Profils ausgebildeten, nach innen zu zurückspringenden Vorsprung (17) gebildet sind, so daß das Profil eine nach außen teilweise geöffnete Umfassung bildet, in der die Dichtung elastisch gehalten wird.

7. Schieber nach einem der Ansprüche 1 bis 6, dadurch gekennzeichnet, daß die beiden vertikalen Stützen (9) und die untere Querstrebe (10) des Schieberkörpers mit auf Gehrung geschnittenen Enden zusammengefügt sind und entweder an ihren inneren oder äußeren Flächen Ausnehmungen aufweisen, die als Aufnahmen für einen Winkel (12) dienen, der mittels Schrauben (13) eine Verbindung zwischen der Stütze (9) und der zugeordneten Querstrebe (10) herstellt.

**Claims**

1. A gate valve having a closure plate which is slidable perpendicular to the direction of flow of the fluid, the body of the valve being constituted by two vertical uprights (9) and two horizontal cross-members (10,11), the two uprights (9) and the lower cross-member (10) having channels (14) acting as slides for the plate (8) and having a joint (22) effecting a seal between the body (7) and the plate (8), characterised in that a generally U-shaped section is located on the base of the channels (14) of the uprights (9) and the lower cross-member (10), in that the section acts directly as a housing for the joint (22) and as a slide for the plate (8) and has retention means (17) for said joint.

2. A gate valve according to claim 1, characterised in that the section (15) is made of a magnetic material.

3. A gate valve according to claims 1 and 2, characterised in that the section (15) has a U-shaped cross-section, the two arms of which widen out towards the exterior, the two arms being parallel after the introduction of the section into the channel (14) of the body of the valve.

4. A gate valve according to any one of claims 1 to 3, characterised in that the external face of the base of the section (15) has at least one longitudinal groove (I8), and in that glue (21) is located in the chamber delimited by said groove and the base of the channel (14).

5. A gate valve according to any one of claims 1 to 3, characterised in that the section (15) has external longitudinal ribs or grooves (23) cooperating with internal longitudinal grooves or ribs (24) formed in the channel (14) in the body of the valve.

6. A gate valve according to any one of claims 1 to 5, characterised in that the means for retaining the joint (22) in the section (15) are constituted by an inwardly turned portion (17) at the end of each of the two arms of the section, the section (15) thus delimiting an enclosure partially open towards its external face and in which the joint is resiliently restrained.

7. A gate valve according to any one of claims 1 to 6, characterised in that the two vertical uprights (9) and the lower cross-member (10) of the valve body are connected together by their chamfered ends and have, on one of their internal or external faces, grooves serving to house angled corners (12) effecting, by means of screws (13) the connection between the corresponding upright (9) and the cross-member (10).

FİG. 1

FİG. 2

FİG. 3

FIG.4

FIG.5

FIG.6

FIG.7